# EUROPEAN PATENT APPLICATION

(11) **EP 2 056 145 A2**
(43) Date of publication of application: **06.05.2009**
(21) Application number: 08167911.0
(22) Date of filing: 30.10.2008
(51) Int. Cl.: G02B 6/44, H02G 9/10

(54) **Lifting a Terminal Enclosure in Below Ground Applications**

(30) Priority: 30.10.2007 US 983582 P
(71) Applicant: ADC Telecommunications, Inc., Eden Prairie, MN 55344-2252 (US)
(72) Inventor: Brandt, James J., St. Louis Park, Minnesota 55426 (US); Smith, Trevor D., Eden Prairie, Minnesota 55346 (US); Barth, Michael Kenneth, Bloomington, Minnesota 55431 (US); Cordle, Glen, Centerville, Minnesota 55038 (US)
(74) Representative: Bohnenberger, Johannes

(57) **Abstract**

A fiber distribution terminal system includes a below ground vault, and a terminal enclosure positioned within the vault. The system also includes a lift system positioned within the vault, the lift system including at least one torsion member, wherein, as the terminal enclosure is pivoted from a lifted position to a below ground position, the torsion member stores potential energy, and wherein, as the terminal enclosure is pivoted from the below ground position to the lifted position, the torsion member releases the potential energy to assist in pivoting the terminal enclosure to the lifted position.

## Description

### RELATED APPLICATION

This application claims the benefit of U.S. Patent Application Serial No. 60/983,582 filed on October 30, 2007, the entirety of which is hereby incorporated by reference.

### BACKGROUND

Terminal enclosures located outside provide a protected and environmentally secure system for management and administration of fiber optic cables. Such terminal enclosures are typically located above ground or below ground in vaults. In below ground applications, it is desirable to provide access to the terminal enclosures so that modifications to the fiber optic terminations in the terminal enclosure can be made.

### SUMMARY

Embodiments of the present disclosure relate to systems and methods for lifting terminal enclosures located in below ground vaults.

In one embodiment, a fiber distribution terminal system includes a below ground vault, and a terminal enclosure positioned within the vault. The system also includes a lift system positioned within the vault, the lift system including at least one torsion member, wherein, as the terminal enclosure is pivoted from a lifted position to a below ground position, the torsion member stores potential energy, and wherein, as the terminal enclosure is pivoted from the below ground position to the lifted position, the torsion member releases the potential energy to assist in pivoting the terminal enclosure to the lifted position.

The above summary is not intended to describe each disclosed embodiment or every implementation of the present disclosure. The figures and detailed description that follow provide additional embodiments. While certain embodiments will be illustrated and described, the disclosure is not limited to use in such embodiments.

### DESCRIPTION OF THE DRAWINGS

Figure 1 is a perspective view of an example terminal enclosure located in an example below ground vault with the terminal enclosure in a below ground position.

Figure 2 is another perspective view of the terminal enclosure and vault of Figure 1, with the terminal enclosure in a lifted position.

Figure 3 is another perspective view of the terminal enclosure and vault of Figure 2, with the terminal enclosure shown exploded from a lift mechanism.

Figure 4 is a perspective view of an example lift mechanism for a terminal enclosure, with the lift mechanism shown in an exploded state.

Figure 5 is another perspective view of the lift mechanism of Figure 4, with the lift mechanism shown in a partially exploded state.

Figure 6 is another perspective view of the lift mechanism of Figure 5 and a below ground vault, with the lift mechanism shown in an exploded state

### DETAILED DESCRIPTION

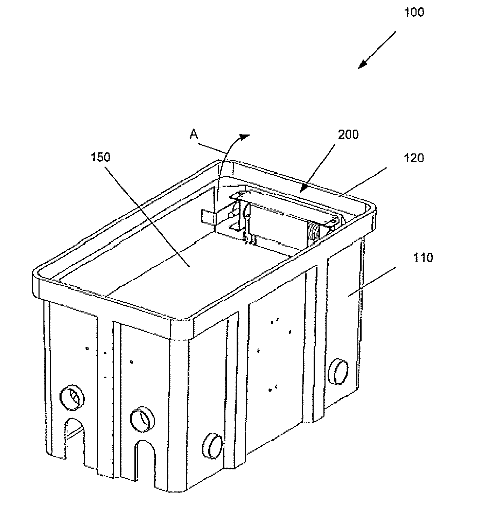

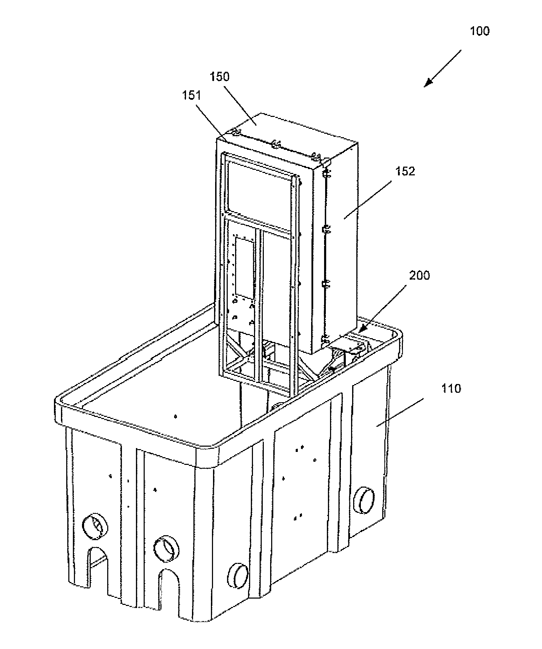

Referring now to Figures 1 and 2, an example of a fiber distribution terminal system 100 including a vault 110 and a terminal enclosure 150 is shown. Vault 110 surrounds terminal enclosure 150. Vault 110 is typically located below ground, so that an upper edge 120 of vault 110 is located substantially at ground level, and a cover (not shown) is typically placed over vault 110 to protect terminal enclosure 150 located within vault 110.

In one example, vault 110 is an enclosure manufactured by Strongwell Corporation of Lenoir City, Tennessee. In the example shown, vault 110 is 30" W x 48" L x 36" D. Other types and sizes of vaults can be used.

Terminal enclosure 150 generally includes a main body 151 and a cover 152 positioned over a portion of main body 151. Cover 152 can be removed from main body 151 by, for example, unlatching cover 152 from main body 151 to provide access to a plurality of fiber optic terminations or other telecommunications connections or equipment within main body 151. Terminal enclosure 150 provides a watertight enclosure to protect fiber optic terminations made therein.

In one example, main body 151 includes an interconnect panel such as the Customer Interconnect Panel (CIP) and/or one or more cross-connect panels such as the AGX-1000HD, the Outside Plant 72- or 96-Fiber Connector Modules (OCM), or the BGX-432, all manufactured by ADC Telecommunications, Inc. of Eden Prairie, Minnesota. In one example, main body 151 has a 432-fiber capacity and weighs approximately 125 lbs. Other types of panels can also be provided in main body 151.

For example, main body 151 can include a plurality of interconnect or cross-connect termination panels that provide cable management and terminate a plurality of fiber optic cables from a central location such as a central office. Main body 151 also provides connections for fiber optic cables running from main body 151 to a plurality of end terminations such as homes or buildings.

A technician can access terminal enclosure 150 to modify fiber optic terminations made therein. Because terminal enclosure 150 is positioned below ground in vault 110, mechanisms are provided to lift terminal enclosure 150 out of vault 110 so that main body 151 of terminal enclosure 150 can be accessed above ground. For example, terminal enclosure 150 can be moved from a first horizontal or below ground position located within vault 110 (see Figure 1), to a second vertical or lifted position out of vault 110 (see Figure 2).

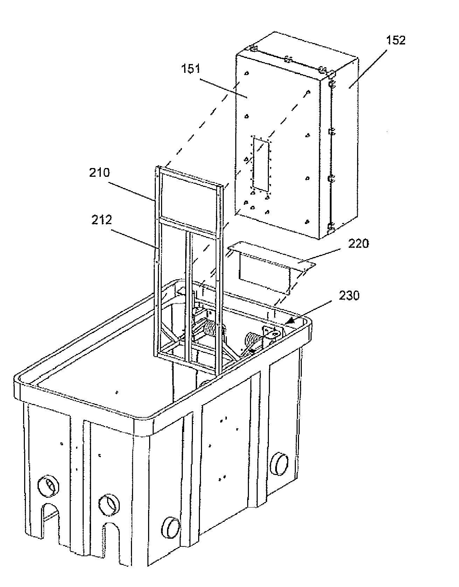

Referring now to Figures 3-6, a system 200 is shown that allows terminal enclosure 150 to be lifted out of vault 100. System 200 generally includes a frame 210, and a torque mechanism 230 that allows terminal enclosure 150 to be lifted out of vault 110 to at least a partially above ground position so that terminal enclosure 150 can be accessed.

As shown in Figure 3, main body 151 of terminal enclosure 150 is connected to a main portion 212 of frame 210 using a plurality of fasteners, such as screws or bolts. Frame 210 pivots with terminal enclosure 150 from the first position within vault 110, to the second lifted position outside vault 110. In the first below ground position, main portion 212 of frame 210 extends generally horizontally. In the second lifted position, main portion 212 extends generally vertically.

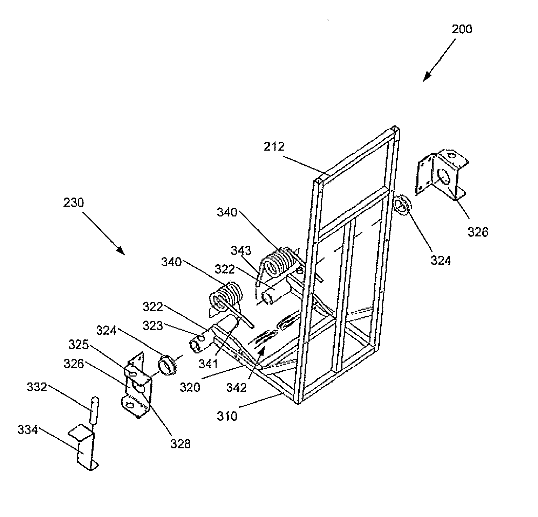

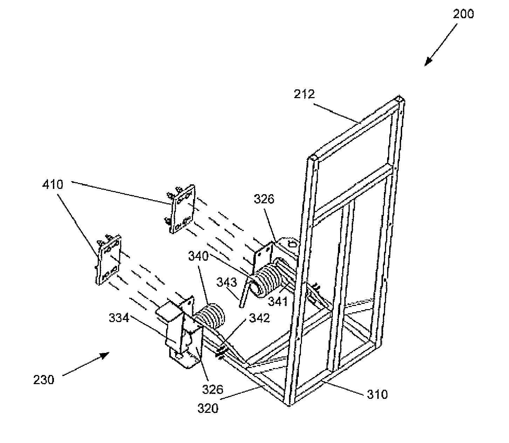

As shown in Figures 4 and 5, a lower portion 310 of frame 210 extends at a right angle with respect to main portion 212 of frame 210. Lower portion 310 includes arms 320 with pivot members 322 connected thereto. Pivot members 322 are generally cylindrical tubes that are sized to fit within sleeves 324. Sleeves 324, in turn, are sized to fit within apertures 328 formed in brackets 326. Sleeves 324 act as bearings to allow pivot members 322 to pivot within apertures 328, as described further below.

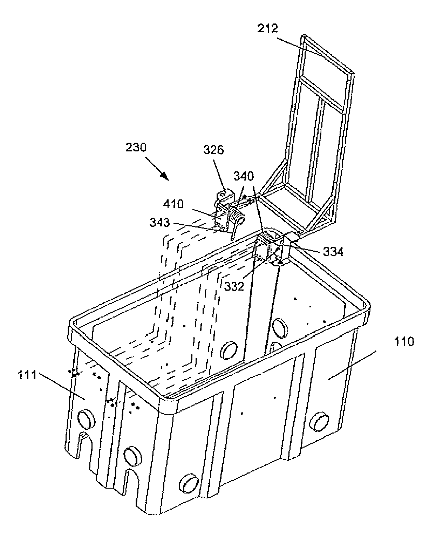

Pivot members 322 extended through sleeves 324 and apertures 328, such that apertures 323 of pivot members 322 are positioned on an opposite side of bracket 326 to that of arms 320. In such a position, apertures 323 formed in pivot members 322 align with apertures 325 of brackets 326 when frame 210 is pivoted to the lifted position. A lock pin 332 is sized to fit through one aperture 325 of bracket 326, as well as one aperture 323 that extends through pivot members 322. With lock pin 332 extending through apertures 323, 325 (see Figure 6), lock pin 332 maintains pivot members 322 in the lifted position, as described below. In some examples, the lock pin 332 is spring actuated such that as the frame 210 is pivoted to the lifted position, the aperture 323 aligns with the aperture 325, and the spring automatically forces the lock pin 332 through the aperture 325 to lock or otherwise maintain the pivot members 332 in the lifted position. The lock pin 332 can be force against the spring back through the aperture 325 to allow the pivot members 332 to be rotated back to the below ground position.

A handle 334 is also coupled to one of pivot members 322 so that handle 334 pivots as pivot members 322 are pivoted from the first to the second position. A mounting bracket 410 is coupled to each of brackets 326 using fasteners such as screws or bolts.

Referring now to Figures 3-6, torsion springs 340 are generally cylindrical in cross-section and are sized to fit about pivot members 322. A first end 341 of each torsion spring 340 is connected to arms 320 of frame 210 using U-bolts 342. A second end 343 of each torsion spring 340 is positioned to engage a wall 111 of vault 110. See Figure 6. In example embodiments, torsion springs 340 are made of wire, ribbon, bars, or coils.

Mounting brackets 410 are used to couple system 200 to wall 111 of vault 110 using fasteners such as screws or bolts. Second ends 343 of torsion springs 340 also engage wall 111 when mounting brackets 410 are coupled to vault 110. Once system 200 is in place in vault 110, a bracket 220 can be coupled to brackets 326 to cover torsion springs 340, and terminal enclosure 150 can be coupled to frame 210. See Figure 3

As terminal enclosure 150 and frame 210 are pivoted from the second lifted position to the first below ground position so that terminal enclosure 150 is received within vault 110, torsion springs 340 are twisted so that torsion springs 340 store potential energy. As terminal enclosure 150 is fully inserted in vault 110 in the below ground position, torsion springs 340 are maintained under pressure, and the weight of terminal enclosure 150 maintains terminal enclosure 150 within vault 110 even under tension created by torsion springs 340. In some embodiments, a member such as a lock or swing arm can be swung over the terminal enclosure 150 when the terminal enclosure 150 is positioned within the vault 110 to maintain the terminal enclosure 150 in the below ground position. The lock or swing arm can be swung away from the terminal enclosure 150 when the technician wants to pivot the terminal enclosure 150 out of the vault 110, as described below.

When a technician wants to access terminal enclosure 150, the technician grasps handle 334 and pivots handle in a direction A. See Figure 1. As handle 334 is pivoted, attached pivot members 322 of frame 210 are also pivoted so that terminal enclosure 150 begins to lift out of vault 110. As frame 210 begins to pivot, torsion springs 340 begin to untwist, and the potential energy stored in torsion springs 340 assists the technician in pivoting terminal enclosure 150 out of vault 110. In this manner, the technician can pivot terminal enclosure 150 from the first below ground position to the second lifted position with assistance from torsion springs 340. With terminal enclosure 150 in the second or lifted position, the technician can place lock pin 332 through apertures 323, 325 to maintain terminal enclosure 150 in the second position. See Figure 6.

Various modifications and alterations of this disclosure will become apparent to those skilled in the art without departing from the scope and spirit of this disclosure, and it should be understood that the disclosure is not to be unduly limited to the illustrative embodiments set forth herein.
The preferred embodiments of the preceding disclosure can be summarized as follows:
Aspect 1 is a fiber distribution terminal system, comprising:
   a below ground vault;
   a terminal enclosure positioned within the vault; and
   a lift system positioned within the vault, the lift system including at least one torsion member, wherein, as the terminal enclosure is pivoted from a lifted position to a below ground position, the torsion member stores potential energy, and wherein, as the terminal enclosure is pivoted from the below ground position to the lifted position, the torsion member releases the potential energy to assist in pivoting the terminal enclosure to the lifted position.
Aspect 2 is the system of aspect 1, further comprising two torsion members.
Aspect 3 is the system of aspect 1, wherein the torsion member is a torsion spring.
Aspect 4 is the system of aspect 1, further comprising a lock pin to lock the terminal enclosure in the lifted position.
Aspect 5 is the system of aspect 1, further comprising a handle positioned to allow a user to grasp the handle to pivot the terminal enclosure from the below ground position to the lifted position.
Aspect 6 is the lift system for a fiber distribution terminal system, the lift system comprising at least one torsion member, wherein, as a terminal enclosure is pivoted from a lifted position to a below ground position within a vault, the torsion member stores potential energy, and wherein, as the terminal enclosure is pivoted from the below ground position to the lifted position out of the vault, the torsion member releases the potential energy to assist in pivoting the terminal enclosure to the lifted position.
Aspect 7 is the system of aspect 6, further comprising two torsion members.
Aspect 8 is the system of aspect 6, wherein the torsion member is a torsion spring.
Aspect 9 is the system of aspect 6, further comprising a lock pin to lock the terminal enclosure in the lifted position.
Aspect 10 is the system of aspect 6, further comprising a handle that allows a user to grasp the handle to pivot the terminal enclosure from the below ground position to the lifted position.
Aspect 11 is the system of aspect 6, wherein the lift system further comprises a frame coupled to the torsion member, wherein the frame includes a main portion configured to be coupled to the terminal enclosure.
Aspect 12 is the system of aspect 11, wherein the frame further includes a lower portion extending at an angle with respect to the main portion, the lower portion including a pivot member coupled thereto.
Aspect 13 is the system of aspect 12, wherein the pivot member includes a cylindrical tube sized to be received in a sleeve, wherein the cylindrical tube pivots within the sleeve to allow the frame to move between the below ground position and the lifted position.
Aspect 14 is the system of aspect 6, wherein the lift system is positioned within the vault.
Aspect 15 is a method for lifting a terminal enclosure from a below ground vault, the method comprising:
   providing a lift system in the vault, the lift system including a torsion spring;
   lifting the terminal enclosure at least partially out of the vault; and
   allowing the torsion spring to assist in lifting the terminal enclosure as the terminal enclosure is lifted out of the vault.
Aspect 16 is the method of aspect 15, further comprising using two torsion springs to assist in the lifting of the terminal enclosure.
Aspect 17 is the method of aspect 15, further comprising locking the terminal enclosure in a lifted position.
Aspect 18 is the method of aspect 15, wherein lifting the terminal enclosure further comprises allowing a user to grasp a handle to pivot the terminal enclosure from a below ground position to a lifted position.
Aspect 19 is the method of aspect 15, further comprising coupling the terminal enclosure to a frame of the lift system.
Aspect 20 is the method of aspect 19, further comprising forming the frame to include a first portion to which the terminal enclosure is coupled, and a second portion extending at an angle from the first portion, the second portion being couple to the vault to allow the frame to be pivoted between a below ground position and a lifted position.

## Claims

1. A fiber distribution terminal system, comprising:
a below ground vault;
a terminal enclosure positioned within the vault; and
a lift system positioned within the vault, the lift system including at least one torsion member, wherein, as the terminal enclosure is pivoted from a lifted position to a below ground position, the torsion member stores potential energy, and wherein, as the terminal enclosure is pivoted from the below ground position to the lifted position, the torsion member releases the potential energy to assist in pivoting the terminal enclosure to the lifted position.

2. The system of claim 1, further comprising two torsion members.

3. The system of claim 1, wherein the torsion member is a torsion spring.

4. The system of claim 1, further comprising a lock pin to lock the terminal enclosure in the lifted position.

5. The system of claim 1, further comprising a handle positioned to allow a user to grasp the handle to pivot the terminal enclosure from the below ground position to the lifted position.

6. A lift system for a fiber distribution terminal system, the lift system comprising at least one torsion member, wherein, as a terminal enclosure is pivoted from a lifted position to a below ground position within a vault, the torsion member stores potential energy, and wherein, as the terminal enclosure is pivoted from the below ground position to the lifted position out of the vault, the torsion member releases the potential energy to assist in pivoting the terminal enclosure to the lifted position.

7. The system of claim 6, further comprising two torsion members.

8. The system of claim 6, wherein the torsion member is a torsion spring.

9. The system of claim 6, further comprising a lock pin to lock the terminal enclosure in the lifted position.

10. The system of claim 6, further comprising a handle that allows a user to grasp the handle to pivot the terminal enclosure from the below ground position to the lifted position.

11. The system of claim 6, wherein the lift system further comprises a frame coupled to the torsion member, wherein the frame includes a main portion configured to be coupled to the terminal enclosure.

12. The system of claim 11, wherein the frame further includes a lower portion extending at an angle with respect to the main portion, the lower portion including a pivot member coupled thereto.

13. The system of claim 12, wherein the pivot member includes a cylindrical tube sized to be received in a sleeve, wherein the cylindrical tube pivots within the sleeve to allow the frame to move between the below ground position and the lifted position.

14. The system of claim 6, wherein the lift system is positioned within the vault.

15. A method for lifting a terminal enclosure from a below ground vault, the method comprising:
providing a lift system in the vault, the lift system including a torsion spring;
lifting the terminal enclosure at least partially out of the vault; and
allowing the torsion spring to assist in lifting the terminal enclosure as the terminal enclosure is lifted out of the vault.

16. The method of claim 15, further comprising using two torsion springs to assist in the lifting of the terminal enclosure.

17. The method of claim 15, further comprising locking the terminal enclosure in a lifted position.

18. The method of claim 15, wherein lifting the terminal enclosure further comprises allowing a user to grasp a handle to pivot the terminal enclosure from a below ground position to a lifted position.

19. The method of claim 15, further comprising coupling the terminal enclosure to a frame of the lift system.

20. The method of claim 19, further comprising forming the frame to include a first portion to which the terminal enclosure is coupled, and a second portion extending at an angle from the first portion, the second portion being couple to the vault to allow the frame to be pivoted between a below ground position and a lifted position.
